(19) Europäisches Patentamt

European Patent Office

Office européen des brevets

(11) **EP 1 544 327 A1**

(12) **EUROPEAN PATENT APPLICATION**
published in accordance with Art. 158(3) EPC

(43) Date of publication:
22.06.2005 Bulletin 2005/25

(51) Int Cl.⁷: **C25D 15/00**, H01M 2/02

(21) Application number: 03792697.9

(86) International application number:
**PCT/JP2003/010405**

(22) Date of filing: **18.08.2003**

(87) International publication number:
**WO 2004/018740 (04.03.2004 Gazette 2004/10)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.08.2002 JP 2002239869**

(71) Applicant: **Toyo Kohan Co., Ltd.
Tokyo 102-8447 (JP)**

(72) Inventors:
• **Ohmura, Hitoshi, c/o Toyo Kohan Co., Ltd.
Yamaguchi 744-8611 (JP)**
• **Tomomori, Tatsuo, c/o Toyo Kohan Co., Ltd.
Yamaguchi 744-8611 (JP)**
• **Honda, Yoshitaka, c/o Toyo Kohan Co., Ltd.
Yamaguchi 744-8611 (JP)**
• **Yamane, Eiji, c/o Toyo Kohan Co., Ltd.
Yamaguchi 744-8611 (JP)**

(74) Representative: **VOSSIUS & PARTNER
Siebertstrasse 4
81675 München (DE)**

(54) **SURFACE TREATED STEEL PLATE FOR BATTERY CASES, ITS MANUFACTURING METHOD, BATTERY CASE FORMED USING THE STEEL PLATE, BATTERY USING THE BATTERY CASE**

(57)    A surface treated steel plate for battery cases having an improved electrical contact with the battery positive electrode active material, its manufacturing method, a battery case, and a battery are disclosed. The surface treated steel plate has a graphite-dispersed nickel plating layer in which graphite is dispersed or a graphite-dispersed nickel alloy plating layer at least on the inner surface of a battery case. The alloy plating layer is preferably of a nickel-cobalt alloy, a nickel-cobalt-iron alloy, a nickel-manganese alloy, a nickel-phosphorus alloy, or a nickel-bismuth alloy. The battery case is produced by forming the surface treated steel plate by drawing, DI, or DTR. The battery uses the battery case.

EP 1 544 327 A1

## Description

Technical Field

This invention relates to a surface treated steel plate for battery cases, a method of manufacturing it, battery cases made by using such a steel plate and batteries made by using those battery cases.

Background Art

The recent increase in the demand for batteries has been accompanied by a strong request for the improvement of their performance. For example, the improvement in performance of alkaline manganese batteries used in small household electrical appliances, such as shavers, requires as the most important thing an improved electron conductivity between an inner can wall serving as the positive electrode in a battery and the active substance for the positive electrode filling the inside of the battery, and in that connection, there have been made many proposals including a method relying upon coating an inner can surface with a paint of high electrical conductivity as proposed in JP-A-58-48361 or JP-A-59-160959, a steel sheet pre-coated for improving the adherence of a coating film thereto as proposed in JP-A-6-342653 or JP-A-8-287885 and making an inner can surface uneven as proposed in JP-A-59-209056, or roughening or cracking an inner can surface as proposed in JP-A-9-306439, as a different way to improve the adherence of a coating film.

However, a steel sheet coated with a paint of high electrical conductivity (an electro-conductive agent) on its surface forming an inner can surface, such as a pre-coated steel sheet known in the art, is likely to have its electro-conductive agent come off easily when battery cases are formed therefrom, and the application of such a paint to the inner surface of cans after they are formed adds to a step in a manufacturing process and thereby a cost of manufacture.

Under these circumstances, it is an object of this invention to provide a surface treated steel sheet of high performance allowing an improved electrical conductivity to an active substance for the positive electrode.

It is another object of this invention to provide a battery case and a battery made by using such a surface treated steel sheet.

Disclosure of the Invention

The surface treated steel sheet for battery cases according to this invention is characterized in that a carbon black-dispersed nickel plating layer having carbon black dispersed therein, or a carbon black black-dispersed nickel alloy plating layer having carbon black dispersed therein is formed on at least its surface supposed to form the inner surface of a battery case.

The surface treated steel sheet for battery cases according to claim 3 is characterized by the plating or alloy plating layer containing graphite dispersed therein with carbon black.

The surface treated steel sheet for battery cases according to claim 4 is characterized in that the alloy plating layer is of any of a nickel-cobalt alloy, a nickel-cobalt-iron alloy, a nickel-manganese alloy, a nickel-phosphorus alloy and a nickel-bismuth alloy.

The surface treated steel sheet for battery cases according to claim 5 is characterized in that a diffusion layer is formed under the plating or alloy plating layer.

The surface treated steel sheet for battery cases according to claim 6 is characterized in that a non-lustrous nickel layer, a semi-lustrous nickel layer, a lustrous nickel layer, a nickel-cobalt alloy layer, a nickel-cobalt-iron alloy layer, a nickel-manganese alloy layer, a nickel-phosphorus alloy layer or a nickel-bismuth alloy layer is formed under the plating or alloy plating layer.

The surface treated steel sheet for battery cases according to claim 7 is characterized in that the plating or alloy plating layer has a carbon black content of 0.1 to 25% by weight.

The method of manufacturing a surface treated steel sheet for battery cases according to claim 8 of this invention is characterized in that a steel sheet is plated with a plating solution containing a nickel salt, a surface active agent and carbon black powder on at least its surface supposed to form the inner surface of a battery case.

The method of manufacturing a surface treated steel sheet according to claim 9 is characterized in that a steel sheet is plated with a plating solution containing one or more of a cobalt salt, an iron salt, a manganese salt, a phosphorus compound and a bismuth salt and further containing a nickel salt, a surface active agent and carbon black powder on at least its surface supposed to form the inner surface of a battery case.

The battery case according to claim 10 of this invention is characterized in that it is formed by using any surface treated steel sheet as set forth above.

The battery according to claim 11 of this invention is characterized by including the battery case according to claim 9.

Best Mode of Carrying Out the Invention

The contents of this invention will now be described in detail.

[Steel Sheet to Be Used]

A cold rolled ordinary steel sheet, particularly a continuous casting of low-carbon aluminum-killed steel, is used as the steel sheet for the purpose of this invention. It is also possible to use very low-carbon steel having a carbon content of 0.003% by weight or less, non-aging steel made by adding a metal, such as niobium or titanium, thereto, or a stainless steel sheet containing 3 to 18% by weight of chromium.

[Undercoat Nickel Plating]

The surface treated steel sheet for battery cases according to this invention is preferably a steel sheet having nickel plating carried out thereon. This nickel plating will hereinafter be called undercoat nickel plating. The undercoat nickel plating is carried out for ensuring satisfactory corrosion resistance even on any battery case that has been formed.
As to an undercoat nickel plating bath, any bath that is usually used for nickel plating, such as a vat, a sulfamate bath, a borofluoride bath or a chloride bath, can be used for the purpose of this invention, too. While nickel plating is electroplating or electroless plating, electroplating is usually easier to employ as it permits bath control and plating thickness control, though electroless plating may also be employed. Electrolysis may be carried out at a current density of 3 to 80 A/dm$^2$ and air agitation conducted by blowing air into the bath, etc. is preferably performed to form a uniform plating layer. The bath preferably has a pH in the acid range of 3.5 to 5.5 and a temperature of 40°C to 60°C.
The undercoat nickel plating for the purpose of this invention may be performed by non-lustrous plating not using any organic additive, or semi-lustrous or lustrous plating using an organic additive. The undercoat nickel plating layer preferably has a nickel content of, say, 0.5 to 5 μm. If its nickel content is less than 0.5 μm, it fails to cover the steel sheet satisfactorily and ensure satisfactory corrosion resistance as intended for undercoat nickel plating. Its content over 5 μm is economically disadvantageous, since it is not expected to produce any better result. The undercoat nickel plating is preferably formed on both surfaces of the steel sheet to ensure corrosion resistance and the plating layer on the surface supposed to form the inner surface of a can preferably has a thickness of about 1 to 3 μm. The plating layer on the surface supposed to form the outer surface of the can preferably has a thickness of 1 to 4 μm. A slightly larger plating layer thickness on the outer surface of the can than on its inner surface is preferable for the rust-proofing of the battery case.
The undercoat plating may also be selected from, for example, nickel-cobalt plating, nickel-cobalt-iron plating, nickel-manganese plating, nickel-phosphorus plating or nickel-bismuth plating which is formed by an alloy bath composed of cobalt, manganese, iron, phosphorus or bismuth and nickel. The bath may be, for example, a well-known sulfate or sulfamate bath. The plating layer thickness may be in the same range as that of undercoat nickel plating.

[Formation of a Diffusion Layer]

The undercoat nickel plating layer is preferably heat treated after plating to form a diffusion layer wholly or partly, though it may also be as plated. The diffusion layer is effective in preventing the nickel plating layer from coming off the base steel sheet.
The heat treatment is preferably carried out in a non-oxidizing or reducing protective gas atmosphere to prevent the formation of any oxide film on the surface of the diffusion layer. An inert gas, such as nitrogen, argon or helium, is suitable for use as the non-oxidizing gas, and hydrogen or cracked ammonia gas (75% hydrogen and 25% nitrogen) is, for example, suitable as the reducing gas. The heat treatment may be carried out by batch or continuous annealing. A heat treating temperature of 450°C or above is preferable for batch annealing, and a short time of treatment is sufficient for continuous annealing, while a relatively long time is required for batch annealing. Generally, a time of, say, 30 seconds to two minutes is preferable for continuous annealing, and a time of, say, six to 15 hours for batch annealing.

[Formation of a Carbon Black-Dispersed Nickel (or Alloy) Plating Layer]

The carbon black-dispersed nickel plating layer is formed on the side supposed to form the inner wall of a battery case. The plating bath to be used is a bath prepared by dispersing carbon black in a nickel plating bath (to form a carbon black-dispersed nickel plating layer) or in an alloy bath composed of nickel and another metal, such as cobalt, manganese, iron, phosphorus or bismuth (to form a carbon black-dispersed nickel alloy plating layer). It is, however, preferable to avoid the use of any bath containing metals or semi-metals such as molybdenum, antimony, arsenic and chromium, since they are likely to generate gas in the battery, or cause a voltage drop. The use of a plating bath having dispersed therein carbon black which is an excellent electro-conductive agent enables carbon black to be dispersed and co-precipitated in a plating layer being formed and be exposed in spots on its surface to thereby improve its electrical contact with the active substance for the positive electrode in the battery. The surface of the nickel plating layer and carbon black-dispersed nickel layer according to this invention is greater in unevenness and contact area and is, therefore, lower in contact resistance than the surface of the steel sheet and nickel plating layer which has hitherto been available. The combination of the steel sheet, nickel plating layer, carbon black-dispersed nickel plating layer and graphite layer according to this invention is also lower in resistance than the combination of the steel sheet, nickel plating layer and graphite layer which has hitherto been available. This is some way or other due to the fact that the boundary surface between the carbon black-dispersed nickel plating layer and the graphite layer according to this invention is lower in resistance than that between the nickel plating and graphite layers.

As to the carbon black to be used for the purpose of this invention, it is possible to use any known kind of carbon black, such as channel black, thermal black, furnace black, acetylene black or ketjen black. Either acetylene or ketjen black is, among others, preferred. These kinds of carbon black have an average particle diameter of 1 to 5 μm, which is so small as compared with that of graphite that a large amount of carbon black can be co-precipitated in the nickel or nickel alloy plating layer. Accordingly, carbon black can realize a lower internal resistance (IR) than graphite. Ketjen black is particularly effective, since it shows a volume resistivity which is 1/2 to 1/3 lower than that of traditional acetylene black.

Not only carbon black, but also a mixture of carbon black and graphite may be added to the plating solution.

Carbon black or graphite is not easy to disperse in the plating solution by its mere stirring because of its hydrophobic particle surfaces. Accordingly, a surface active agent (a dispersing agent for carbon black or graphite) is used for forced dispersion. While it is possible to use any of cationic, anionic, nonionic and amphoteric surface active agents, it is preferable to use an anionic surface active agent as the surface active agent for the purpose of this invention to form a plating layer showing good adhesion to the steel sheet to be plated and having a low tendency toward embrittlement and from among anionic surface active agents, it is still more preferable to use as the surface active agent (the dispersing agent for carbon black or graphite) for the purpose of this invention a benzenesulfonate or sulfate type surface active agent, for example, alkyl sodium sulfate, sodium dodecylbenzenesulfonate, sodium α-olefinsulfonate, sodium alkylnaphthalenesulfonate or dialkyl sodium 2-sulfosuccinate.

Finely divided carbon black can be dispersed in the plating solution by kneading carbon black powder and a carbon black dispersing agent diluted with a specific amount of water and finally forming its dispersion by using an emulsifier, such as a homogenizer or an ultrasonic cleaner. In this connection, it is effective for its dispersion to wet the carbon black powder with a small amount of alcohol, etc. After carbon black has been thoroughly dispersed, its dispersion is added into the plating solution under stirring. The proportion of the dispersing agent is preferably, say, from 0.5 to 10% by weight of carbon black. The proportion of carbon black is preferably so adjusted that the plating solution may eventually contain 1 to 100 g of carbon black per liter. If its proportion is less than 1 g per liter, there is formed a plating film having too low a carbon black content to realize any satisfactorily improved electrical conductivity between the inner wall of the battery case and the active substance for the positive electrode, and if it exceeds 100 g per liter, the plating solution has its fluidity lowered and the adherence of carbon black powder to the plating apparatus and its surroundings is likely to cause various kinds of trouble. The dispersing agent is added to the plating solution in the amount of, say, 2 to 10 ml per liter in advance to suppress the coagulation of carbon black particles therein.

The plating solution in a dispersion plating bath having carbon black powder dispersed therein preferably has its carbon black powder kept in a dispersed state by circulating the plating solution into the bottom of an electrolytic cell by means of a pump in a circulating tank and stirring it by blowing air thereinto through apertures made at the bottom of the electrolytic cell. If a good state of dispersion can be maintained, it is possible to form a plating layer containing 0.1 to 25% of carbon black dispersed therein. It is particularly preferable to have, say, 1 to 10% thereof dispersed therein. When forming a carbon black-dispersed plating layer, it is preferable to employ a lower current density to improve its carbon black content.

[Forming Battery Cases]

While any forming method can be employed for forming a battery case, it is particularly preferable to rely upon a deep drawing and ironing method, or the so-called DI (drawing and ironing) or DTR (drawing thin and redraw) method. When the DI method is employed, a shallow-drawn cup-shaped blank having a diameter slightly larger than the outside diameter of a battery can to be formed is prepared from a surface-treated thin steel sheet, is fed to a plurality of ironing dies so arranged coaxially with one another as to have a progressively decreasing drawing diameter and is continuously passed so as not to form any constriction, as it is pressed by a punch having a rounded end against the last die having a drawing diameter corresponding to the outside diameter of the battery can to be formed.

When the DTR method is employed, a shallow-drawn cup is prepared as in the case of the DI method, and is redrawn to form progressively a redrawn cup which is smaller in diameter and larger in height than the initial shallow-drawn cup. The cup is held by a ring-shaped holder inserted therein and a redrawing die under it, while a redrawing punch is so positioned as to be capable of reciprocating in the holder coaxially with the die, and redrawing punches having different diameters are used one after another. Any other forming method can be used for making a battery case, if required.

[Manufacture of an Alkaline Manganese Battery]

A positive electrode mixture for an alkaline manganese battery is prepared by mixing manganese dioxide, carbon powder and an aqueous alkali solution. Electrolytic manganese dioxide of high purity is preferably used as manganese dioxide. Graphite powder is required to be high in purity, chemically stable and good in electrical conductivity, mixture forming property and liquid retaining property, and examples of the graphite powder satisfying those requirements are acetylene black and various kinds of modified products of carbon black, such as graphitized carbon black and synthetic graphite powder.

The positive electrode mixture is prepared by mixing electrolytic manganese dioxide and graphite powder in the ratio by weight of preferably from 20:1 to 10:1, adding an aqueous solution of potassium hydroxide and mixing them by an adequate method.

It is preferable to spray or otherwise coat the inner surface of the battery case with, for example, a mixture of graphite powder, a thermosetting resin and an organic solvent, such as methyl ethyl ketone, and dry it to improve electrical conductivity between the battery case and the positive electrode mixture, if required.

Then, the mixture is pressed in a mold to form a mixture pellet having a given donut shape and it is press fitted in the battery. The battery case has a neck-in formed at an appropriate location under its open end for mounting a negative electrode plate having a negative electrode collecting rod spot welded thereto.

A separator used in a battery is used for preventing the mutual migration of particles of the active substances for the negative and positive electrodes and keeping any reaction product on the negative electrode from contacting the positive electrode to thereby prevent any internal short-circuiting of the battery and its self-discharge, and is made of an alkali-resistant fibrous material or non-woven fabric. As its material, it is possible to use, for example, a synthetic resin, such as vinylon, polyolefin or polyamide, or linter pulp, mercerized wood pulp or regenerated cellulose having an $\alpha$-cellulose content of 98% or above.

The fibrous separator is inserted along the inner periphery of the pellet of the positive electrode mixture press fitted in the battery case and a negative electrode gel formed from zinc particles and an aqueous solution of potassium hydroxide having zinc oxide dissolved therein is inserted in the battery case. As the zinc particles, it is preferable to use an atomized powder having a center particle diameter in the vicinity of 200 $\mu$m and as the gel material, it is possible to use starch, a cellulose derivative, polyacrylate, etc.

After their insertion in the battery case, an insulating gasket is attached to the negative electrode plate and swaged to give an alkaline manganese battery.

Examples

Examples

The invention will now be described in further detail by way of examples.

[Example 1]

A hot rolled steel sheet (low carbon steel sheet) having a thickness of 0.4 mm and containing 0.03% C, 0.20% Mn, 0.01% Si, 0.011% P, 0.06% S, 0.035% Al and 0.0025% N, all by weight, was cold rolled, annealed and temper rolled for use as a sheet to be plated. The sheet to be plated was subjected to anodic treatment (for 10 seconds at 5 A/dm$^2$) and cathodic treatment (for 10 seconds at 5 A/dm$^2$) at 75°C by using an aqueous solution of NaOH (30 g/L) and degreased with an alkali. Then, it was pickled by about 15 seconds of immersion in an aqueous solution of sulfuric acid (having a concentration of 50 g per liter) and its undercoat nickel plating was performed in a vat under the conditions stated below, while it was agitated with air. A titanium basket having a polypropylene bag fitted therein and having a nickel pellet inserted therein was used as the anode.

The plating time was so regulated as to achieve a plating thickness of 0.5 $\mu$m on the surface supposed to form the inside of a battery case and a plating thickness of 2.0 $\mu$m on the surface supposed to form the outside of the battery case.

[Conditions for Undercoat Nickel Plating]

[Bath Composition]

| Nickel sulfate | 300 g/L |
|---|---|
| Nickel chloride | 45 g/L |
| Boric acid | 45 g/L |

[Plating Conditions]

| Bath temperature | 55±2°C |
|---|---|
| pH | 4.2±0.2 |
| Current density | 20 A/dm$^2$ |

[Carbon Black-Dispersed Nickel Plating]

Then, carbon black-dispersed nickel plating was performed by using a carbon black-dispersed nickel plating bath under the conditions stated below. The carbon black-dispersed nickel plating bath was agitated with air, too, and the anode conditions were the same as stated above in connection with the undercoat nickel plating. In the carbon black-dispersed nickel plating treatment, the plating time and the amount of carbon black (or the amount of carbon black and graphite) added to the plating bath were altered to vary the plating thickness and the proportion of carbon black (or carbon black and graphite) dispersed in the plating layer.

[Conditions for Carbon Black-Dispersed Nickel Plating]

[Bath Composition]

| Nickel sulfate | 300 g/L |
|---|---|
| Nickel chloride | 40 g/L |
| Boric acid | 40 g/L |
| Acetylene black | 1 g/L |
| Dispersing agent | 5 mL/L |
| Pitless agent (sodium | laurylsulfate) 2.0 mL/L |

[Plating Conditions]

| Bath temperature | 55±3°C |
|---|---|
| pH | 43±0.3 |
| Current density | 15 A/dm$^2$ |

[Preparation of an Acetylene Black-Dispersed Plating Bath]

Acetylene black was dispersed in a plating bath in the manner stated below. A dilution was first prepared by diluting 4 mL of commercially available sodium benzenesulfonate (a dispersing agent for acetylene balck) with 1 L of desalted water and 1 kg of acetylene black was mixed in the dilution (a mixed solution). One liter of desalted water was added to the mixed solution to improve its fluidity and they were thoroughly mixed under stirring by using an ultrasonic dispersing machine to prepare a diluted mixed dilution. The diluted mixed solution was added to the plating bath under stirring to prepare an acetylene black-dispersed plating bath. A product of Denki Kagaku Kogyo Kabushiki Kaisha was used as acetylene black.

[Forming a Battery Case]

Then, the plated steel sheet was used to make an LR-6 type battery case by deep drawing, DI or DTR method.

The observation by magnification of the inner surface of the case with an electronic microscope confirmed the adherence of carbon black in dots thereto. The carbon black content of the plating film was determined by infrared absorption (JIS G 1211).

The examination of the relation which might exist between the amount of carbon black added to the plating bath and the carbon black content of the carbon black-dispersed plating layer confirmed the presence of substantially direct proportion therebetween when the amount of the dispersing agent added to the plating solution was fixed. More specifically, the carbon black content of the surface treated steel sheet was from 1 to 25% when the amount of carbon black added to the plating bath was from 5 to 100 g/L. The carbon black content of the surface treated steel sheet was in proportion to the amount of the dispersing agent added until the latter was up to 10 mL/L. No larger amount thereof led to any further increase in the carbon black content.

[Manufacture of a Battery]

A battery was made by filling the battery case with an active substance for the positive electrode, and examined for performance, as described below.

A positive electrode mixture was prepared by taking manganese dioxide and graphite in the ratio by weight of 10:1 and mixing 8 moles of potassium hydroxide therewith. A mixture of 80 parts by weight of graphite and 20 parts by weight of a thermosetting epoxy resin was diluted with methyl ethyl ketone and its dilution was air-sprayed against the inner surface of the battery case and dried by heating at 150°C for 15 minutes. The positive electrode mixture was pressed in a mold to form a mixture pellet having a given donut shape and it was press fitted in the battery. The battery case had a neck-in formed at an appropriate location under its open end for mounting a negative electrode plate having a negative electrode collecting rod spot welded thereto.

Then, a separator formed from a non-woven fabric of vinylon was inserted along the inner periphery of the pellet press fitted in the battery case and a negative electrode gel formed from zinc particles and potassium hydroxide having zinc oxide dissolved therein was inserted in the battery case. An insulating gasket was attached to the negative electrode plate and after its insertion in the battery case, it was swaged to make a complete alkaline manganese battery. The alkaline manganese battery as made was examined for its internal resistance (IR), short-circuit current (SCC) and discharge characteristics at 1 A. The results are shown in Table 1.

Table 1 - Conditions for Sample Manufacture and Battery Performance

| | | Inner or outer surface of battery case | Undercoat plating material and weight (g/m²) | Heat treatment after undercoat Ni plating | Dispersed plating | | | Battery performance | | |
|---|---|---|---|---|---|---|---|---|---|---|
| | | | | | Kind | Plating weight (g/m²) | Carbon black and graphite content (wt%) | IR (mΩ) | SCC (A) | Discharge at 1 A (min.) |
| Example | 1 | Inner surface of can | Ni 4.5 | None | Ni-carbon black | 5.1 | 0.3 | 151 | 8.0 | 15.8 |
| | | Outer surface of can | Ni 17.8 | | - | - | - | | | |
| | 2 | Inner surface of can | Ni 7.9 | 550°C×8h | Ni-carbon black | 8.2 | 4.2 | 149 | 8.1 | 16.1 |
| | | Outer surface of can | Ni 17.8 | | - | - | - | | | |
| | 3 | Inner surface of can | Ni 7.9 | 550°C×8h | Ni-carbon black | 1.5 | 2.6 | 149 | 8.1 | 16.1 |
| | | Outer surface of can | Ni 17.8 | | - | - | - | | | |
| | 4 | Inner surface of can | Ni-5%Co 7.8 | None | Ni-carbon black | 8.1 | 2.3 | 148 | 8.2 | 17.0 |
| | | Outer surface of can | Ni-5%Co 17.5 | | - | - | - | | | |
| | 5 | Inner surface of can | Ni 7.7 | None | Ni-carbon black-graphite | 7.9 | 1.2 | 145 | 8.2 | 17.3 |
| | | Outer surface of can | Ni 17.6 | | - | - | - | | | |
| | 6 | Inner surface of can | Ni 7.8 | 780°C×2min | Ni-carbon black-graphite | 8.1 | 2.3 | 148 | 8.2 | 17.0 |
| | | Outer surface of can | Ni 17.5 | | - | - | - | | | |
| | 7 | Inner surface of can | Ni 7.6 | 550°C×8h | Ni-carbon black-graphite | 8.1 | 0.35 | 150 | 8.0 | 16.1 |
| | | Outer surface of can | Ni 17.8 | | - | - | - | | | |
| Comp. Ex. | 1 | Inner surface of can | Ni 4.5 | None | - | - | - | 161 | 6.6 | 14.2 |
| | | Outer surface of can | Ni 18.3 | | | | - | | | |
| | 2 | Inner surface of can | Ni 8.5 | 780°C×2min | - | - | - | 169 | 5.8 | 13.4 |
| | | Outer surface of can | Ni 17.6 | | | | - | | | |
| | 3 | Inner surface of can | Ni 7.9 | 550°C×8h | - | - | - | 159 | 6.2 | 14.3 |
| | | Outer surface of can | Ni 18.1 | | | | - | | | |

[Example 2]

Undercoat nickel plating was performed on a low-carbon steel sheet of the same composition as according to Example 1 by repeating the same conditions, but altering the thickness of the undercoat nickel plating layer. After its undercoat nickel plating, the steel sheet was subjected to eight hours of thermal diffusion treatment at 550°C in an atmosphere containing 94% by volume of nitrogen and 6% by volume of hydrogen. After its thermal diffusion treatment, its temper rolling was conducted to prevent any stretcher strain from being formed therein. Moreover, its carbon black-dispersed plating was conducted by altering the acetylene black concentration according to Example 1 to 15 g/L.

[Example 3]

Undercoat nickel plating, thermal diffusion treatment and temper rolling were performed on a low-carbon steel sheet of the same composition as according to Example 2 by repeating the same conditions. Its carbon black-dispersed plating was conducted by adding 10 g/L of ketjen black (product of Lion Corporation) instead of acetylene black according to Example 2.

[Example 4]

Undercoat plating was performed with an alloy of nickel and 5% cobalt on a low-carbon steel sheet of the same composition as according to Example 2 under the following conditions.

[Conditions for Undercoat Nockel-Cobalt Alloy Plating]

[Bath Composition]

| Nickel sulfate | 300 g/L |
| Nickel chloride | 45 g/L |
| Cobalt sulfate | 5 g/L |
| Boric acid | 45 g/L |

[Plating Conditions]

| Bath temperature | 55±2°C |
| pH | 4.2±0.2 |
| Current density | 20 A/dm$^2$ |

No thermal diffusion treatment was conducted thereon, but its carbon black-dispersed plating was conducted by repeating the conditions of Example 2.

[Example 5]

Undercoat nickel plating was performed on a low-carbon steel sheet of the same composition as according to Example 4 under the same conditions. No thermal diffusion treatment was conducted thereon, but its carbon black-dispersed plating was conducted under the following conditions.

[Conditions for Carbon Black and Graphite-Dispersed Nickel Plating]

[Bath Composition]

| Nickel sulfate | 300 g/L |

(continued)

| Nickel chloride | 40 g/L |
|---|---|
| Boric acid | 40 g/L |
| Graphite (product average particle diameter of | of Nippon Graphite having an 1 μm) 4 g/L |
| Acetylene black (product | of Denki Kagaku Kogyo) 1 g/L |
| Dispersing agent | 5 mL/L |
| Pit preventing agent | (sodium laurylsulfate) 2.0 mL/L |

[Plating Conditions]

| Bath temperature | 55±3°C |
|---|---|
| pH | 4.3±0.3 |
| Current density | 15 A/dm$^2$ |

[Example 6]

Undercoat nickel plating was performed by repeating the conditions of Example 5. The sheet to be plated was, however, not an annealed steel sheet as according to Examples 1 to 5, but a very low-carbon steel sheet of the following composition not annealed:

Steel sheet composition: C - 0.003 wt% (% by weight), Mn - 0.19 wt%, Si - 0.01 wt%, P - 0.011 wt%, S - 0.06 wt%, Al - 0.035 wt%, N - 0.0021 wt%, Nb - 0.002 wt%.

Its thermal diffusion treatment was conducted at 780°C for two minutes in the same atmosphere as according to Example 2. Its carbon black-dispersed plating was conducted by repeating the conditions of Example 5.

[Example 7]

Undercoat nickel plating and thermal diffusion treatment were performed on a low-carbon steel sheet of the same composition as according to Example 2 under the same conditions. Its carbon black-dispersed plating was conducted under the following conditions.

[Conditions for Carbon Black and Graphite-Dispersed Nickel Plating]

[Bath Composition]

| Nickel sulfate | 300 g/L |
|---|---|
| Nickel chloride | 40 g/L |
| Boric acid | 40 g/L |
| Graphite (product of Nippon Graphite having an average particle diameter of 1 μm) | 0.5 g/L |
| Ketjen black (product of Lion Corporation) | 1 g/L |
| Dispersing agent | 5 mL/L |
| Pit preventing agent (sodium laurylsulfate) | 2.0 mL/L |

[Plating Conditions]

| Bath temperature | 55±3°C |
|---|---|
| pH | 4.3±0.3 |

(continued)

| Current density | 15 A/dm$^2$ |
|---|---|

[Comparative Example 1]

Example 1 was repeated for the degreasing, pickling and undercoat nickel plating of a steel sheet of the same composition of Example 1.

[Comparative Example 2]

Example 6 was repeated for the undercoat nickel plating, heat treatment and re-temper treatment of a steel sheet of the same composition of Example 6, but no further plating thereof was performed.

[Comparative Example 3]

Example 2 was repeated for the undercoat nickel plating, heat treatment and re-temper treatment of a steel sheet of the same composition of Example 2, but no carbon black-dispersed plating thereof was thereafter performed.

(Forming a Battery Case)

The formation of a battery case by the DI method was carried out by using the plated steel sheet having a thickness of 0.4 mm, shaping a blank having a diameter of 41 mm into a cup having a diameter of 20.5 mm and subjecting it to redrawing and two stages of ironing by a DI machine to form a case having an outside diameter of 13.8 mm, a wall thickness of 0.20 mm and a height of 56 mm. It was finally trimmed at its top to give an LR6 battery case having a height of 49.3 mm. The DI method was applied to the surface treated steel sheets according to Examples 1 to 3 and Comparative Example 1.

The formation of a battery case by the DTR method was carried out by using a plated steel sheet having a thickness of 0.25 mm, punching it into a blank having a diameter of 58 mm and subjecting it to several times of drawing and redrawing to form an LR6 battery case having an outside diameter of 13.8 mm, a wall thickness of 0.20 mm and a height of 49.3 mm. The DTR method was applied to the surface treated steel sheets according to Examples 4 to 6 and Comparative Example 2.

The formation of a battery case by the deep drawing method was carried out by using a plated steel sheet having a thickness of 0.25 mm, punching it into a blank having a diameter of 57 mm and subjecting it to several times of drawing and redrawing to form an LR6 battery case having an outside diameter of 13.8 mm, a wall thickness of 0.25 mm and a height of 49.3 mm. The deep drawing method was applied to the surface treated steel sheets according to Example 7 and Comparative Example 3.

The properties of the steel sheets and the characteristics of the batteries according to the Examples and Comparative Examples were determined as will now be stated.

(1) Determination of the Carbon Black and Graphite Contents of Plating Films:

They were determined by the infrared absorption method according to JIS-G-1211. The amounts of nickel and carbon in 1 g of a plated steel sheet were measured, while the amount of carbon in the same steel sheet not plated was also measured, and their comparison was adopted for calculating the carbon black and graphite content (% by weight) of the plating film in accordance with the following expression:

$$\text{Carbon black and graphite content (\% by weight)} = C / (Ni + C) \times 100$$

(2) Evaluation for Internal Resistance (IR):

Each battery as manufactured was examined for its internal resistance (m$\Omega$) by the AC impedance method after three days of storage at 80°C.

(3) Evaluation for Short-Circuit Current (SCC):

After three days of storage at 80°C, an ammeter was connected to each battery as manufactured to form a closed circuit and the current value of the battery was measured as its short-circuit current.

(4) Discharge Characteristics:

After three days of storage at 80°C, a resistance of 2 Ω was connected to each battery as manufactured to form a closed circuit and time was measured until a voltage of 0.9 V was reached.

Industrial Applicability:

Since the battery case of this invention has a carbon black-dispersed nickel or nickel alloy plating layer containing carbon black as at least the outermost layer of its inner surface, it enables a low contact resistance, a high short-circuit current and a long time of continuous discharge as compared with a nickel or nickel-iron alloy layer. Thus, the battery case of this invention containing carbon black in its plating layer provides an improved battery performance.

**Claims**

1. A surface treated steel sheet for battery cases having a carbon black-dispersed nickel plating layer having carbon black dispersed therein and formed on at least its surface supposed to form the inner surface of a battery case.

2. A surface treated steel sheet for battery cases having a carbon black-dispersed nickel alloy plating layer having carbon black dispersed therein and formed on at least its surface supposed to form the inner surface of a battery case.

3. The surface treated steel sheet for battery cases according to claim 1 or 2, wherein the plating or alloy plating layer contains graphite dispersed therein.

4. The surface treated steel sheet for battery cases according to claim 2 or 3, wherein the alloy plating layer is of any of a nickel-cobalt alloy, a nickel-cobalt-iron alloy, a nickel-manganese alloy, a nickel-phosphorus alloy and a nickel-bismuth alloy.

5. The surface treated steel sheet for battery cases according to any of claims 1 to 4, wherein a diffusion layer is formed under the plating or alloy plating layer.

6. The surface treated steel sheet for battery cases according to any of claims 1 to 5, wherein a non-lustrous nickel layer, a semi-lustrous nickel layer, a lustrous nickel layer, a nickel-cobalt alloy layer, a nickel-cobalt-iron alloy layer, a nickel-manganese alloy layer, a nickel-phosphorus alloy layer or a nickel-bismuth alloy layer is formed under the plating or alloy plating layer.

7. The surface treated steel sheet for battery cases according to any of claims 1 to 6, wherein the plating or alloy plating layer has a carbon black content of 0.1 to 25% by weight.

8. A method of manufacturing a surface treated steel sheet for battery cases, **characterized in that** a steel sheet is plated with a plating solution containing a nickel salt, a surface active agent and carbon black powder on at least its surface supposed to form the inner surface of a battery case.

9. A method of manufacturing a surface treated steel sheet for battery cases, **characterized in that** a steel sheet is plated with a plating solution containing one or more of a cobalt salt, an iron salt, a manganese salt, a phosphorus compound and a bismuth salt and further containing a nickel salt, a surface active agent and carbon black powder on at least its surface supposed to form the inner surface of a battery case.

10. A battery case formed by using the surface treated steel sheet according to any of claims 1 to 7.

11. A battery including the battery case according to claim 10.

**EP 1 544 327 A1**

## INTERNATIONAL SEARCH REPORT

| International application No. |
|---|
| PCT/JP03/10405 |

A. CLASSIFICATION OF SUBJECT MATTER
Int.Cl$^7$  C25D15/00, H01M2/02

According to International Patent Classification (IPC) or to both national classification and IPC

B. FIELDS SEARCHED

Minimum documentation searched (classification system followed by classification symbols)
Int.Cl$^7$  C25D15/00, 15/02, 7/00, H01M2/02

Documentation searched other than minimum documentation to the extent that such documents are included in the fields searched
Jitsuyo Shinan Koho          1922–1996   Toroku Jitsuyo Shinan Koho   1994–2003
Kokai Jitsuyo Shinan Koho    1971–2003   Jitsuyo Shinan Toroku Koho   1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 00/05437 A1  (Toyo Kohan Co., Ltd.),<br>03 February, 2000 (03.02.00),<br>Claims; page 5, lines 24 to 26<br>& EP 1103438 A1          & KR 2001-86350 A<br>& CN 1311829 A | 1,2,4–11<br>3 |
| X<br>Y | JP 2000-268783 A  (Toyo Kohan Co., Ltd.),<br>29 September, 2000 (29.09.00),<br>Claims; Par. No. [0022]<br>(Family: none) | 1,2,4–11<br>3 |
| X<br>Y | JP 2002-180296 A  (Toyo Kohan Co., Ltd.),<br>26 June, 2002 (26.06.02),<br>Claims; Par. No. [0010]<br>(Family: none) | 1,2,4–11<br>3 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September, 2003 (09.09.03) | 24 September, 2003 (24.09.03) |

| Name and mailing address of the ISA/<br>    Japanese Patent Office | Authorized officer |
|---|---|
| Facsimile No. | Telephone No. |

Form PCT/ISA/210 (second sheet) (July 1998)

**INTERNATIONAL SEARCH REPORT**

International application No.

PCT/JP03/10405

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 94/22174 A1  (Nisshin Steel Co., Ltd.),<br>29 September, 1994 (29.09.94),<br>Claims<br>& JP 6-342653 A          & EP 643428 A1<br>& US 5527641 A | 3 |

Form PCT/ISA/210 (continuation of second sheet) (July 1998)